# EUROPEAN PATENT APPLICATION

(11) **EP 3 492 541 A1**
(43) Date of publication of application: **05.06.2019**
(21) Application number: 17833126.0
(22) Date of filing: 28.07.2017
(51) Int. Cl.: C09D 191/06, C08K 3/34, C09C 1/42

(54) **COMPOSITIONS BASED ON EMULSIONS OF WAX AND PARTICULATE INORGANIC COMPOUNDS FOR IMPROVED WATER-REPELLENCY, AND THE USE THEREOF**

(30) Priority: 28.07.2016 WO PCT/BR2016/050175
(71) Applicant: Isogama Industria Quimica LTDA, 83181-000 São José dos Pinhais (BR)
(72) Inventor: FORMENTI, Giulio Pieter, 81200-110 Curitiba (BR); UGARTE,Bruno Cesar Ortiz, 88181-000 São José dos Pinhais (BR)
(74) Representative: Schneider Feldmann AG Patent- und Markenanwälte
(86) International application number: PCT/BR2017/050213
(87) International publication number: WO 2018/018122

(57) **Abstract**

A description is given of compositions based on emulsions of wax and particulate inorganic compounds for improved water-repellency, comprising, in terms of a percentage relative to the total composition, from 5% to 90% water, from 0.01% to 20% surfactants, from 2% to 90% waxes and from 2% to 90% particulate inorganic compounds with a particle size of between 0.01µm and 1000µm and selected from non-modified phyllosilicates such as agalmatolite, potassium aluminosilicate, magnesium silicate talc, or mixtures of these in any proportion, added before or after the emulsification of said waxes, giving rise to a synergistic effect of increasing water-repellency when said compositions are applied to reconstituted wood composite panels, mortars, textures, plaster and dyes for use in civil construction.

## Description

### FIELD OF THE INVENTION

The present invention pertains to the field of wax emulsions, more specifically, wax emulsions associated with particulate inorganic compounds, particularly used in the manufacturing process of reconstituted wood sheets obtained from wood composite materials such as MDP Density Particleboard), MDF (Medium Density Fiberboard), OSB (Oriented Strand Board), HDF (High Density Fiberboard), among others, especially monocomponent emulsions prepared from natural or synthetic waxes associated with certain inorganic compounds whose synergistic effect a substantial increase in the water repellency of such materials and, therefore, a significant reduction in the water absorption of the substrate.

Consistent with those skilled in the art, the invention also encompasses the use of these emulsions in the preparation of mortars, textures, plasters, paints, among other applications in civil construction.

Furthermore, the present invention is directed to the use of said emulsions in surface applications to various market segments, such as paper, paperboard, packaging and others, for total or partial surface waterproofing of these substrates, i.e., creating a barrier against the water.

### BACKGROUND OF THE INVENTION

It is well known to those skilled in the art that wood composite materials are used in a wide variety of applications, especially for commercial and residential building materials. All parts of the trees, which is the main raw material in all the end products of this industry, have some use and value in the process. Once a tree cut is peeled, it can be converted into a fairly differentiated set of shapes, by cutting and / or cutting it in different sizes / consistencies, or by combining it with some form of resin, prior to pressing / molding. The end result of the process is a composite of wood developed for specific applications.

Such wood composites, as well as for all previously mentioned applications, the permeability / porosity of these substrates allows the water molecules to penetrate the pores, resulting in dimensional, structural, mechanical resistance, durability and appearance problems, among others.

These problems can be overcome with the use of improved or modified formulations from the appropriate choice of additives and different wax compositions, it being necessary to consider the emulsification reactions and the most suitable particle size for each application as well as in general the manufacturing process.

Thus, in order to reduce the permeability of these materials, especially wood composites, wax emulsions are usually applied, which can be followed by the application of inorganic materials, such as silane-based additives, separately, generating a barrier against the advancement of moisture.

Disadvantageously, however, the application of the wax emulsions and the inorganic compounds in a separate manner impairs the homogeneity of the application and, consequently, there is a loss of efficiency in the impermeability and dimensional stability of the substrate receiving such applications, thus occurring reducing performance in the final product, in addition to resulting in higher costs due to the existence of an additional stage of application.

Generally, a wax may be emulsified in water when it is melted and surfactants, which may be of the anionic type (soaps, whether sodium, ammonium or other anions of non-ionic fatty acids (see US 2244685 A) and cationic, followed by agitation and homogenization by pressurizing (see US 3865606 A) or ultrasonic irradiation. A hydrophobic inorganic material may be obtained in nature, synthesized or mixed (see US 5183710 A), and may be dispersed in water or solvent using some dispersing agent or some rheological agent or agitation (see US 20080287554 A1). This inorganic material can be functionalized with hydrophobic agents, be they silanes, long chain fatty acids, fluorinated compounds, polymers and other materials for better hydrophobic effect.

These materials may be used as separate hydrophobic agents in the form of wax emulsion films (see US 4468254A), using the inorganic compounds together with a sealant (see US 20140208978 A1). The wax emulsion may be used within materials for which it is desired to obtain water barrier (see EP 1509580 A4).

Thus, in in-depth state-of-the-art analysis, emulsions were found using water-repellent compounds. As a result, it can be noted that, for example, French patent FR2952814B1, "Cold emulsified composition comprises fatty phase, aqueous phase and particulate phase comprising organically modified phyllosilicates capable to be positioned at the same time as the oil water interface to exclusively generate oil in water emulsion "of November 23, 2009, from Ephyla Sas, teaches a cold emulsified composition comprising a grease phase, an aqueous phase and a particulate phase comprising organically modified phyllosilicates capable of being positioned at the water- oil to exclusively generate oil-in-water emulsion.

Such document discloses an oil-in-water emulsion, particularly used for cosmetic purposes, which disadvantageously does not exhibit sufficient water-repellent effect for applications in building materials.

Further, U.S. Application US2003176537A1, "Composite Materials with Improved Phyllosilicate Dispersion", provides modified edge phyllosilicates with anionic surfactants, composite materials made from these phyllosilicates and methods for producing the same. In various embodiments the phyllosilicates are surface-modified with hydrophilic lipophilic (HLB) modifying agents, polymeric hydrotropes and antioxidants. The publication also provides blends of those phyllosilicates and semi-crystalline waxes. The composites are prepared by dispersing said phyllosilicates with polymers, in particular polyolefins and elastomers.

Thus, this patent document teaches only the dispersion of phyllosilicates in polymeric materials, departing from the characteristics presented by the object of the invention that is proposed, as it does not define any composition suitable for application in the substrates mentioned above, so that the application of such phyllosilicates will result in potentiated water repellency effects in such materials.

Finally, U.S. Application US2003187120A1, "Coatings and films derived from clay / wax nanocomposites", provides methods for making clay / wax nanocomposites and coatings and films thereof with improved chemical resistance and gas barrier properties. The subject invention further provides methods for producing and using such clay / wax nanocomposite emulsions. Typically, an organophilic clay is combined with a wax or wax / polymer blend such that the cohesive energy of the clay corresponding to that of the wax or wax / polymer blend. Suitable organophilic clays include mica and phyllosilicates which have been treated with surface modifying agents. The resulting nanocomposites have applications on metal, plastic or paper surfaces such as industrial coatings and protective packaging.

Thus, in addition to this patent document addressing the field of nanocomposites, which manufacturing processes are of high complexity and high cost, disadvantageously, there are also no compositions suitable for the various applications proposed by the invention.

There is thus seen in the art a gap with respect to wax-based emulsions added with particulate inorganic compounds, in particular agalmatolite. The agalmatolite consists mainly of two aluminum phyllosilicates - pyrophyllite (Al₂O₃.4SiO₂.H₂O) and Muscovite (K₂O.3Al₂O₃.6SiO₂.2 H₂O), in association with minerals such as sericite (a variety of Muscovite, finely crystallized), quartz, kyanite, andalusite, diaspora and feldspar. As accessory minerals the presence of rutile, zircon and tourmaline is common. Depending on its mineralogy, agalmatolite may be white, cream, gray, greenish and purple. The agalmatolite is inert, has a density of 2.7 to 3.0 and a hardness of 2.5 to 3.0.

In addition to the agalmatolite, minerals such as potassium aluminosilicate, talc and magnesium silicate are useful materials for the purposes of the invention since they have a synergistic effect of increasing the water repellency of these emulsions in order to reduce the water absorption in composite materials of reconstituted wood and other applications cited. These particulate minerals represent a competitive advantage since the current means of reducing water absorption by the use of known additives, such as silane additives, in addition to having a high acquisition cost, also generate an extra handling cost.

In order to solve the aforementioned problems and disadvantages, the present invention proposes wax-based emulsions associated with particulate inorganic compounds, which have a synergistic effect of increasing the water-repellency in said emulsions.

Thus, it is an object of the present invention to contribute to the dimensional stability of the substrate in order to solve performance problems and at a low cost as compared to conventional emulsions and / or waxes with only wax compositions. The swelling and absorption tests, quoted below, are indicative of sufficient dimensional stability for the skilled person in the art.

Further, in view of the high water-repellent performance and improved yield of this composition, another object of the present invention is to use particulate inorganic materials which bring economic benefits when compared to wax-only products, since they do not require the use of other higher cost additives.

Advantageously, the present invention proposes the formation of a single product, composed of the combination of waxes and particulate inorganic compounds, able to provide greater reduction of water absorption, reducing the cost of production and facilitating the application, thus increasing the performance of the product in terms of water repellency.

### SUMMARY OF THE INVENTION

The present invention relates to a wax-based emulsion, or wax composition, and one or more pure or mixed particulate inorganic compounds in any proportion, the object of which is to utilize the synergism between the waxes and the particulate inorganic compounds in order to reduce the absorption of water and improve dimensional stability of the substrate.

The wax compositions added with said minerals have the main benefit of reducing water absorption, in addition to contributing to the dimensional stability of the substrate when compared to conventional emulsions and waxes with only wax compositions.

Due to the high water-repellent performance and better performance of these compositions, the economic benefits are easily perceived when compared to products based on waxes alone.

The combination of the particulate inorganic additive with the wax-based emulsion and / or a wax composition has a synergistic effect, which confers a high water-repellent degree to the substrate. As a consequence of this degree of water repellency, there is a reduction in water absorption, especially in relation to the present means of reducing the water absorption, by means of silane-based additives, which in addition to the high cost, also require additional steps of handling.

Particulate inorganic compounds in the particle size range of 0.01 µm to 1000 µm, preferably 20 µm to 60 µm, come from minerals that synergistically increase the water repellency effect of these emulsions. Particulate inorganic compounds are selected from agalmatolite, potassium aluminosilicate, talc, magnesium silicate. The order of addition of the particulate inorganic compounds is not critical, these being added before or after the emulsification of the waxes.

The compositions of the invention based on wax emulsions and particulate inorganic compounds for improved water repellency are therefore composed of a grease phase, an aqueous phase and an inorganic particulate phase selected from unmodified phyllosilicates such as agalmatolite, potassium aluminosilicate, talc, magnesium silicate, with particle size between 0.01 µm and 1000 µm, specifically with particle size between 20 µm and 60 µm.

The compositions of the invention comprise, by weight percent relative to the total weight of the composition:
a) water, from 5 to 90%, specifically 30 to 50%;
b) surfactants from 0.01 to 20%, specifically from 0.5 to 3%;
c) waxes of from 2 to 90%, specifically from 35 to 60%; and
d) particulate inorganic compounds in the proportion of 2 to 90%, specifically 5 to 35%.

### DETAILED DESCRIPTION OF THE INVENTION

Wax emulsions are added from particulate inorganic compounds with a particle size range of 0.01 µm to 1000 µm, preferably from 20 µm to 60 µm, from minerals that impart a synergistic effect of increasing the water repellency of these emulsions. presents with greater intensity when the size of each particle is of 20 µm to 60 µm, therefore occurs better distribution of these particles in the substrate.

The association of the particulate inorganic compounds with the emulsions potentiates the water-repellent effect of the waxes due to the adsorption of the surfactant molecules, where the polar or hydrophilic region of the molecule anchors the inorganic compound by means of electrostatic effects, whereas the apolar part tends to stay in the external region by associating with the waxes present in the emulsion. This novel system, at the moment of deposition of the product in the substrate, especially in the particulate wood, increases the hydrophobic character of the substrate.

Particulate inorganic compounds useful for the purposes of the invention are selected from phyllosilicates such as unmodified agalmatolite, potassium aluminosilicate, talc, magnesium silicate or mixtures thereof in any proportion, added before or after the emulsification of the waxes, in order to that such emulsions are mainly applied to composite panels of reconstituted wood.

In a preferred embodiment, the emulsion of the invention is produced by the use of homogenizers and then mixed with the inorganic compound(s). The emulsion resulting from this process is applied to the particulate wood in panel manufacturing processes and thereby is incorporated into the panel structure.

The emulsion addressed by the invention is composed of: **i.** water, used as a carrier; **ii.** waxes, used as water repellent agents and chosen from among: minerals selected from among vaseline, paraffin, microcrystalline petroleum wax, slack wax, ozocerite, lignite wax, peat wax; plants selected from among soybeans, palms, flax, candelilla, carnauba, ricin and olive, esters; animals, selected from among beeswax, lanolin, beef fat derivatives; or synthetic, selected from among polyethylene wax and Fischer-Tropsch wax; **iii.** surfactants, used as emulsifying agents, that may be anionic, selected from among sodium, potassium, ammonium and other fatty acid soaps; fatty acids and sulfated, sulfonated, phosphate, malleated benzene derivatives ; non-ionics, selected from among polyvinyl derivatives, acrylate derivatives, woodpulp derivatives, ethoxylated fatty alcohols, sulfated, sulfonated phosphated and ethoxylated malleated benzene derivatives, etc; and cationics: tertiary fatty amine derivatives; alkyl benzene amine derivatives and similar ethoxyelated products; and **iv.** particulate inorganic compounds, used as water repellent agents, selected from among calcium and magnesium carbonate, dolomite, limestone, barite, kaolin, mica, pyrophyllite, manganese and aluminum silicate, gypsum, plaster, calcium sulfate, titanium dioxide, silicon dioxide, iron oxides, chrome oxides, antimony oxides, aluminum oxides and hydroxides, unmodified phyllosilicates such as agalmatolites, bentonite, montmorillonite, hectorite, saponite, and illite, phyllosilicates and variations thereof. The inorganic compounds are used alone or in combinations among them, in any proportion. In a preferred embodiment, the inorganic compound used is agalmatolite.

The wax composition according to the invention is comprised within the limits of:
a) water, from 5 to 90%, specifically 30 to 50% by weight relative to the total weight of the composition;
b) surfactants from 0.01 to 20%, specifically from 0.5 to 3% by weight relative to the total weight of the composition;
c) waxes of from 2 to 90%, in particular from 35 to 60% by weight relative to the total weight of the composition; and
d) particulate inorganic compounds of 2 to 90%, specifically 5 to 35%, by weight relative to the total weight of the composition, with a particle size of of 0.01 µm to 1000 µm, specifically 20 µm to 60 µm.

Thus, in a preferred embodiment, the particulate inorganic compounds are aluminum, potassium and magnesium silicate, unmodified phyllosilicates selected from agalmatolite, mica, pyrophyllite, muscovite or mixtures thereof, being used neat or combined in any proportion.

Furthermore, the particulate inorganic compounds are alternatively defined as calcium and magnesium carbonates, dolomite, limestone, barite, kaolin, mica, pyrophyllite, agalmatolites, manganese and aluminum silicate, gypsum, plaster, calcium sulfate, titanium dioxide, silicon dioxide, iron oxides, chrome oxides, antimony oxides, aluminum oxides and hydroxides, bentonite, montmorillonite, hectorite, saponite, and illite, unmodified phyllosilicates or mixtures thereof, used pure or combined in any proportion.

In one embodiment of the invention the composition consists of an aqueous paraffin emulsion produced according to the following formulation, as a percentage relative to the total weight of the composition:
a) 48% water
(b) 35% paraffin selected from petrolatum, paraffin, microcrystalline petroleum wax, slack wax, ozocerite, lignite wax, peat wax, soybean, palm, linseed, candelilla, carnauba, castor, olive, esters, beeswax, lanolin, bovine tallow derivatives, polyethylene wax and Fischer-Tropsch wax; and
c) 2% surfactant selected from sodium, potassium, ammonia and other fatty acids; arachidic acids and sulphated, sulfonated, phosphated, malleated benzene derivatives; polyvinyl derivatives, acrylate derivatives, cellulose derivatives, ethoxylated fatty alcohols, sulphated, sulfonated, phosphated and malleated ethoxylated benzene derivatives, etc.; tertiary fatty amine derivatives; alkyl benzene amine derivatives and the like ethoxylates thereof; and
d) 15% of particulate inorganic compounds selected from unmodified phyllosilicates, including agalmatolite, potassium aluminosilicate, talc and magnesium silicate, pure or mixed together in any proportion.

### EXAMPLE 1

A paraffin emulsion of the composition described above was applied in agglomerated panel industrial production line. A dosage reduction was also performed to demonstrate improved performance.

Performance data of the composition of the invention in regard to swelling and water absorption are listed in Table 1 below, including limits of industrial plant acceptance. It is possible to observe that even with the reduction of 25% in the internal layer, the results of swelling and absorption (tests according to ABNT NBR 14810: 2013) were acceptable and close to the initial performance.

**Table 1**

| Emulsion dosage | | Panels leaving the press | | Sanded panels | | | |
|---|---|---|---|---|---|---|---|
| Dosage internal layer, % | Dosage external layer, % | Swelling 2 hours, % (max. 8%) | Absorption 2 hours, % (max. 35%) | Swelling 2 hours, % (max. 8%) | Absorption 2 hours, % (max.35%) | Swelling 24 hours, % (max. 16%) | Absorption 24 hours, % (max. 70%) |
| 0.40 | 0.35 | 7.50 | 26.33 | 6.01 | 19.88 | 11.82 | 39.90 |
| 0.40 | 0.35 | 7.00 | 26.75 | 6.32 | 20.45 | 10.43 | 36.75 |
| 0.35 | 0.30 | 7.86 | 29.79 | 7.45 | 21.13 | 12.83 | 43.52 |
| 0.35 | 0.30 | 7.96 | 31.37 | | | | |
| 0.35 | 0.30 | 7.30 | 26.60 | | | | |
| 0.30 | 0.30 | 7.86 | 31.08 | 7.95 | 22.00 | 11.07 | 37.52 |
| 0.30 | 0.30 | 7.84 | 29.57 | | | | |

According to the table below, laboratory tests of MDP panels with paraffin emulsion, with and without inorganic compound, evaluated by swelling and water absorption according to ABNT NBR 14.810: 2003, show lower swelling and absorption of the emulsions with inorganic compound.

The paraffin emulsion in both cases has 52% total solids; the emulsion with inorganic compound had 30% of its paraffin replaced with inorganic compound.

**Table 2**

| | Swelling 2 hours (%) | Absorption 2 hours (%) | Swelling 24 hours (%) | Absorption 24 hours (%) |
|---|---|---|---|---|
| Emulsion without inorganic compound | 3.5 | 17.5 | 10.1 | 47.0 |
| Emulsion with 30% inorganic compound | 2.7 | 15.6 | 8.5 | 44.9 |

It should be clear to those skilled in the art that this invention is not limited to the embodiments discussed or illustrated here and should be understood in its broad scope.

Many modifications and other representations of the invention will come to the mind of one skilled in the art to which this invention belongs, having the benefit of the teaching presented in the above descriptions in this report.

Furthermore, it is understood that the present invention is not limited to the specific form disclosed, and that modifications and other forms are understood to fall within the scope of the appended claims. Although specific terms are employed here, they are used only in a generic and descriptive manner and not as a limiting purpose.

## Claims

1. "**COMPOSITIONS BASED ON WAX EMULSIONS AND PARTICULATE INORGANIC COMPOUNDS FOR IMPROVED WATER REPELLENCY"**, with the said compositions being **characterized in that** they are comprised by percentage of weight of the total composition:
a. Water at 5% to 90%;
b. Surfactants at 0.01% to 20%;
c. Waxes at 2% to 90%; and
d. particulate inorganic compounds at 2% to 90%, with a particle size between 0.01 µm to 1000 µm.

2. "**COMPOSITIONS BASED ON WAX EMULSIONS AND PARTICULATE INORGANIC COMPOUNDS FOR IMPROVED WATER REPELLENCY"**, according to Claim 1, **characterized in that** they are comprised by percentage of weight of the total composition of 30% to 50% water, 0.5% to 3% surfactants, 35% to 60% waxes, and 5% to 35% particulate inorganic compounds with a particle size of 20 µm to 60 µm.

3. "**COMPOSITIONS BASED ON WAX EMULSIONS AND PARTICULATE INORGANIC COMPOUNDS FOR IMPROVED WATER REPELLENCY"** according to Claim 1, **characterized in that** they comprise:
a. 48% water;
b. 35% wax;
c. 2% surfactants; and
d. 15% particulate inorganic compounds.

4. "**COMPOSITIONS BASED ON WAX EMULSIONS AND PARTICULATE INORGANIC COMPOUNDS FOR IMPROVED WATER REPELLENCY "**, according to any one of Claims 1 to 3, **characterized in that** the waxes are to be selected from minerals, selected from among vaseline, paraffin, microcrystalline petroleum wax, slack wax, ozocerite, lignite wax, peat wax; plant, selected from among soybean, palm, flaxseed, candelilla, carnauba, ricin, olive waxes, esters; animal, selected from among beeswax, lanolin, beef lard derivatives; and synthetic, selected from between polyethylene wax and Fischer-Tropsch wax and used pure or mixed in any proportion.

5. "**COMPOSITIONS BASED ON WAX EMULSIONS AND PARTICULATE INORGANIC COMPOUNDS FOR IMPROVED WATER REPELLENCY"**, according to Claim 4, **characterized in that** the wax is to be selected from among paraffin.

6. "**COMPOSITIONS BASED ON WAX EMULSIONS AND PARTICULATE INORGANIC COMPOUNDS FOR IMPROVED WATER REPELLENCY "**, according to any one of Claims 1 to 3, **characterized in that** the particulate inorganic compounds are to be selected from among calcium and magnesium carbonate, dolomite, limestone, barite, kaolin, mica, unmodified phyllosilicates including pyrophyllite, agalmatolites, manganese silicate and aluminum, gypsum, plaster, calcium sulfate, titanium dioxide, silicon dioxide, iron oxides, chrome oxides, antimony oxides, aluminum oxides and hydroxides, bentonite, montmorillonite, hectorite, saponite, and illite, with the said compounds used pure or combined in any proportion.

7. "**COMPOSITIONS BASED ON WAX EMULSIONS AND PARTICULATE INORGANIC COMPOUNDS FOR IMPROVED WATER REPELLENCY",** according to Claim 6, **characterized in that** the inorganic compound is to be unmodified agalmatolite.

8. **"USE OF THE COMPOSITIONS",** according to any one of Claims 1 to 3, **characterized in that** the said use is to be on sheets of reconstituted wood obtained from wood composite materials.

9. **"USE OF THE COMPOSITIONS"**, according to Claim 8, **characterized in that** the said use is to be on MDP (Medium Density Particleboard), MDF (Medium Density Fiberboard), OSB (Oriented Strand Board) and HDF (High Density Fiberboard).

10. **"USE OF THE COMPOSITIONS"**, according to Claim 8, **characterized in that** it is alternatively used in the preparation of mortars, textures, plasters and paints for civil construction.
